(19) Europäisches Patentamt / European Patent Office / Office européen des brevets

(11) **EP 4 451 735 A1**

(12) **EUROPEAN PATENT APPLICATION**
published in accordance with Art. 153(4) EPC

(43) Date of publication:
**23.10.2024 Bulletin 2024/43**

(21) Application number: **23745894.8**

(22) Date of filing: **09.01.2023**

(51) International Patent Classification (IPC):
**H04W 28/08** (2023.01)    **H04W 28/20** (2009.01)

(52) Cooperative Patent Classification (CPC):
**H04W 28/06; H04W 28/08; H04W 28/20**

(86) International application number:
**PCT/CN2023/071343**

(87) International publication number:
**WO 2023/143011 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.01.2022 CN 202210114486**

(71) Applicant: **Huawei Technologies Co., Ltd.
Shenzhen, Guangdong 518129 (CN)**

(72) Inventors:
• **HOU, Hailong
Shenzhen, Guangdong 518129 (CN)**
• **JIN, Zhe
Shenzhen, Guangdong 518129 (CN)**
• **SUN, Huan
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND APPARATUS**

(57)    Embodiments of this application provide a communication method and apparatus. The method includes: A network device sends configuration information of a BWP to a terminal device, where the BWP may include at least a first bandwidth and a second bandwidth, the first bandwidth is determined based on a radio frequency bandwidth of the terminal device, and the second bandwidth is determined based on a baseband bandwidth of the terminal device. The terminal device receives the configuration information of the BWP from the network device. The terminal device communicates with the network device by using the BWP. According to this application, both the radio frequency bandwidth and the baseband bandwidth may be considered for the BWP configured by the network device for the terminal device, so that the BWP is applicable to a terminal device whose radio frequency bandwidth and baseband bandwidth are the same, and is also applicable to a terminal device whose radio frequency bandwidth and baseband bandwidth are different. Therefore, according to the foregoing solutions, terminal devices having a plurality of bandwidth capabilities can access the network device, and further communicate with the network device.

FIG. 2

## Description

This application claims priority to Chinese Patent Application No. 202210114486.6, filed with the China National Intellectual Property Administration on January 30, 2022 and entitled "COMMUNICATION METHOD AND APPARATUS", which is incorporated herein by reference in its entirety.

## TECHNICAL FIELD

Embodiments of this application relates to the communication field, and in particular, to a communication method and apparatus.

## BACKGROUND

5th generation (5th generation, 5G) mobile communication technology new radio (new radio, NR) is a global 5G standard for a brand-new air interface design implemented based on orthogonal frequency division multiplexing (orthogonal frequency division multiplexing, OFDM), and is also a very important foundation for a next generation cellular mobile technology. Currently, a concept of a bandwidth part (bandwidth part, BWP) is introduced in NR. According to the NR protocol, a network device may configure a BWP for a terminal device. When a size of a bandwidth of the BWP is less than or equal to a maximum bandwidth of the terminal device, the terminal device may communicate with the network device.

A bandwidth of the terminal device includes a radio frequency bandwidth and a baseband bandwidth. In a scenario in which the radio frequency bandwidth and the baseband bandwidth of the terminal device are the same, when the network device configures the bandwidth of the BWP for the terminal device, reference may be made to one of the radio frequency bandwidth and the baseband bandwidth. For example, when the size of the bandwidth of the BWP is less than or equal to a maximum radio frequency bandwidth of the terminal device, the size of the bandwidth of the BWP is not greater than a maximum baseband bandwidth of the terminal device. However, with development of technologies, a scenario in which the radio frequency bandwidth and the baseband bandwidth of the terminal device are different occurs. In this case, it is unclear whether the bandwidth of the BWP is configured with reference to the radio frequency bandwidth or the baseband bandwidth. Therefore, how to configure a bandwidth of a BWP to enable the bandwidth of the BWP to be applicable to terminal devices having different bandwidth capabilities is an urgent problem to be resolved.

## SUMMARY

This application provides a communication method and apparatus, so that a network device can configure a BWP for a terminal device whose radio frequency bandwidth and baseband bandwidth are different.

According to a first aspect, this application provides a communication method. An execution body of the method may be a terminal device, or may be a chip used in a terminal device. The following uses an example in which the execution body is a terminal device for description.

The method may include: The terminal device receives configuration information of a BWP from a network device, where the BWP includes at least a first bandwidth and a second bandwidth, the first bandwidth is determined based on a radio frequency bandwidth of the terminal device, and the second bandwidth is determined based on a baseband bandwidth of the terminal device; and the terminal device communicates with the network device by using the BWP.

Based on the foregoing technical solutions, a bandwidth of the BWP configured by the network device for the terminal device may include two parts, for example, denoted as the first bandwidth and the second bandwidth respectively. The first bandwidth is determined based on the radio frequency bandwidth of the terminal device, and the second bandwidth is determined based on the baseband bandwidth of the terminal device. In other words, the first bandwidth may be configured based on the radio frequency bandwidth, and the second bandwidth may be configured based on the baseband bandwidth. In this manner, both the radio frequency bandwidth and the baseband bandwidth may be considered for the BWP configured by the network device for the terminal device, so that the BWP is applicable to a terminal device whose radio frequency bandwidth and baseband bandwidth are the same, and is also applicable to a terminal device whose radio frequency bandwidth and baseband bandwidth are different. Therefore, according to the foregoing solutions, terminal devices having a plurality of bandwidth capabilities can access the network device, and further communicate with the network device.

In a possible design, the first bandwidth indicates a maximum range of a frequency domain resource used by the terminal device to receive or send a signal, and the second bandwidth indicates a maximum transmission bandwidth of the frequency domain resource used by the terminal device to receive or send the signal.

In a possible design, a size of the first bandwidth is less than or equal to a maximum radio frequency bandwidth of the terminal device, and a size of the second bandwidth is less than or equal to a maximum baseband bandwidth of the terminal device. Alternatively, both a size of the first bandwidth and a size of the second bandwidth are less than or equal to a maximum radio frequency bandwidth of the terminal device, and are greater than a maximum baseband bandwidth of the terminal device. Alternatively, both a size of the first bandwidth and a size of the second bandwidth are less than or equal to a maximum radio frequency bandwidth of the terminal device, and are less than or equal to a maximum baseband bandwidth of the terminal device. Alternatively, both a size of the first bandwidth and a size of the second bandwidth are greater than a maximum radio frequency bandwidth of the terminal device, and are greater than a maximum baseband bandwidth of the terminal device.

Based on the foregoing technical solutions, there may be the following four cases of a size relationship between the first bandwidth and the second bandwidth and the maximum radio frequency bandwidth and the maximum baseband bandwidth of the terminal device.

In a first case, when the size of the first bandwidth is less than or equal to the maximum radio frequency bandwidth of the terminal device, and the size of the second bandwidth is less than or equal to the maximum baseband bandwidth of the terminal device, a size of a bandwidth of the frequency domain resource used by the terminal device to transmit or receive the signal is less than or equal to the maximum baseband bandwidth of the terminal device. In this case, a baseband of the terminal device does not need to process a data block that exceeds a bandwidth capability of the terminal device. Therefore, a processing delay is not increased, and this also helps reduce an overall transmission delay of the signal.

In a second case, when both the size of the first bandwidth and the size of the second bandwidth are less than or equal to the maximum radio frequency bandwidth of the terminal device, and are greater than the maximum baseband bandwidth of the terminal device, a size of a bandwidth of the frequency domain resource used by the terminal device to transmit or receive the signal is less than or equal to the maximum radio frequency bandwidth of the terminal device, and may be greater than the maximum baseband bandwidth of the terminal device. In this case, a radio frequency of the terminal device may receive all signals, and no data is lost.

In a third case, when both the size of the first bandwidth and the size of the second bandwidth are less than or equal to the maximum radio frequency bandwidth of the terminal device, and are less than or equal to the maximum baseband bandwidth of the terminal device, a size of a bandwidth of the frequency domain resource used by the terminal device to transmit or receive the signal is less than or equal to the maximum radio frequency bandwidth of the terminal device, and is less than or equal to the maximum baseband bandwidth of the terminal device. In this case, the terminal device may directly reuse an existing BWP mechanism, an NR protocol is slightly modified, and a performance loss is also reduced.

In a fourth case, when both the size of the first bandwidth and the size of the second bandwidth are greater than the maximum radio frequency bandwidth of the terminal device, and are greater than the maximum baseband bandwidth of the terminal device, a size of a bandwidth of the frequency domain resource used by the terminal device to transmit or receive the signal may be greater than the maximum radio frequency bandwidth of the terminal device, or may be greater than the maximum baseband bandwidth of the terminal device. In this case, the terminal device may directly reuse the existing signal to communicate with the network device. For example, the terminal device reuses an existing synchronization signal/PBCH block (synchronization signal block, SSB) to communicate with the network device, so that resource overheads can be reduced.

In a possible design, the configuration information of the BWP includes at least a frequency domain position of the first bandwidth. A frequency domain position of the second bandwidth may be determined based on the frequency domain position of the first bandwidth. Based on the foregoing technical solutions, the terminal device may dynamically send or receive the signal on a frequency domain resource of the first bandwidth. It is considered that the frequency domain position of the second bandwidth can be determined based on the frequency domain position of the first bandwidth. In this case, when the size of the first bandwidth is less than or equal to the maximum radio frequency bandwidth of the terminal device, the terminal device may not readjust a radio frequency when switching the frequency domain position of the second bandwidth. Therefore, a switching delay of the terminal device is reduced, and the terminal device can also obtain a larger frequency diversity gain.

In a possible design, that a frequency domain position of the second bandwidth may be determined based on the frequency domain position of the first bandwidth includes: The frequency domain position of the second bandwidth may be determined based on an offset and the frequency domain position of the first bandwidth. For example, the offset may be an offset of the frequency domain position of the second bandwidth relative to the frequency domain position of the first bandwidth.

In a possible design, M frequency domain resources determined based on the second bandwidth and N frequency domain positions of the second bandwidth are M sub-BWPs in the BWP, where N and M are positive integers.

In a possible design, the method further includes: determining frequency domain resource allocation of a physical downlink shared channel PDSCH/physical uplink shared channel PUSCH based on the first bandwidth and the second bandwidth. Based on the foregoing technical solutions, the frequency domain resource allocation of the physical downlink shared channel PDSCH/physical uplink shared channel PUSCH may be determined based on both the first bandwidth and the second bandwidth, so that the frequency diversity gain or a frequency selective scheduling gain can be ensured, a granularity of a resource block group is reduced, frequency domain resource utilization is improved, and detection performance of a frequency domain resource of the physical downlink shared channel PDSCH/physical uplink shared channel PUSCH is improved.

In a possible design, for frequency domain resource allocation whose type is a type 0, a quantity of resource block groups included in the BWP may be determined based on the first bandwidth and the second bandwidth. A quantity of resource blocks included in the BWP is determined based on the first bandwidth, and a size of the resource block group is determined based on the second bandwidth.

In a possible design, a processing delay of a first channel/first signal of the terminal device is greater than a processing delay of a first channel/first signal of a second terminal device. A bandwidth of the first channel/first signal of the terminal device is greater than the maximum baseband bandwidth of the terminal device, and the bandwidth of the first channel/first signal of the terminal device is less than or equal to the maximum radio frequency bandwidth of the terminal device. A bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device, where "/" represents "or".

Based on the foregoing technical solutions, when the bandwidth of the first channel/first signal of the terminal device is greater than the maximum baseband bandwidth of the terminal device, and the bandwidth of the first channel/first signal of the terminal device is less than or equal to the maximum radio frequency bandwidth of the terminal device, the baseband of the terminal device may complete processing of a large data block by increasing the processing delay.

According to a second aspect, this application provides a communication method. An execution body of the method may be a network device, or may be a chip used in a network device. The following uses an example in which the execution body is a network device for description.

The method may include: The network device sends configuration information of a BWP to a terminal device, where the BWP includes at least a first bandwidth and a second bandwidth, the first bandwidth is determined based on a radio frequency bandwidth of the terminal device, and the second bandwidth is determined based on a baseband bandwidth of the terminal device; and the network device communicates with the terminal device based on the BWP.

Based on the foregoing technical solutions, a bandwidth of the BWP configured by the network device for the terminal device includes two parts, for example, denoted as the first bandwidth and the second bandwidth respectively. The first bandwidth is determined based on the radio frequency bandwidth of the terminal device, and the second bandwidth is determined based on the baseband bandwidth of the terminal device. In other words, the first bandwidth may be configured based on the radio frequency bandwidth, and the second bandwidth may be configured based on the baseband bandwidth. In this manner, both the radio frequency bandwidth and the baseband bandwidth may be considered for the BWP configured by the network device for the terminal device, so that the BWP is applicable to a terminal device whose radio frequency bandwidth and baseband bandwidth are the same, and is also applicable to a terminal device whose radio frequency bandwidth and baseband bandwidth are different. Therefore, according to the foregoing solutions, the network device can communicate with terminal devices having different bandwidth capabilities.

In a possible design, the first bandwidth indicates a maximum range of a frequency domain resource used by the terminal device to receive or send a signal, and the second bandwidth indicates a maximum transmission bandwidth of the frequency domain resource used by the terminal device to receive or send the signal.

In a possible design, a size of the first bandwidth is less than or equal to a maximum radio frequency bandwidth of the terminal device, and a size of the second bandwidth is less than or equal to a maximum baseband bandwidth of the terminal device. Alternatively, both a size of the first bandwidth and a size of the second bandwidth are less than or equal to a maximum radio frequency bandwidth of the terminal device, and are greater than a maximum baseband bandwidth of the terminal device. Alternatively, both a size of the first bandwidth and a size of the second bandwidth are less than or equal to a maximum radio frequency bandwidth of the terminal device, and are less than or equal to a maximum baseband bandwidth of the terminal device. Alternatively, both a size of the first bandwidth and a size of the second bandwidth are greater than a maximum radio frequency bandwidth of the terminal device, and are greater than a maximum baseband bandwidth of the terminal device.

In a possible design, the configuration information of the BWP includes at least a frequency domain position of the first bandwidth. A frequency domain position of the second bandwidth is determined based on the frequency domain position of the first bandwidth.

In a possible design, that a frequency domain position of the second bandwidth is determined based on the frequency domain position of the first bandwidth includes: The frequency domain position of the second bandwidth is determined based on an offset and the frequency domain position of the first bandwidth. The offset may be an offset of the frequency domain position of the second bandwidth relative to the frequency domain position of the first bandwidth.

In a possible design, M frequency domain resources determined based on the second bandwidth and N frequency domain positions of the second bandwidth are M sub-BWPs in the BWP, where N and M are positive integers.

In a possible design, the method further includes: determining frequency domain resource allocation of a physical downlink shared channel PDSCH/physical uplink shared channel PUSCH based on the first bandwidth and the second bandwidth.

In a possible design, for frequency domain resource allocation whose type is a type 0, a quantity of resource block groups included in the BWP is determined based on the first bandwidth and the second bandwidth. A quantity of resource blocks included in the BWP is determined based on the first bandwidth, and a size of the resource block group is determined based on the second bandwidth.

In a possible design, a processing delay of a first channel/first signal of the terminal device is greater than a processing delay of a first channel/first signal of a second terminal device. A bandwidth of the first channel/first signal of the terminal device is greater than the maximum baseband bandwidth of the terminal device, and the bandwidth of the first channel/first signal of the terminal device is less than or equal to the maximum radio frequency bandwidth of the terminal device. A bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device.

According to a third aspect, a communication apparatus is provided. For beneficial effects, refer to descriptions in the first aspect. Details are not described herein again. The communication apparatus has functions of implementing behavior in the method example in the first aspect. The functions may be implemented by hardware, or may be implemented by hardware executing corresponding software. The hardware or the software includes one or more modules corresponding to the foregoing functions. In a possible design, the communication apparatus includes: a transceiver module, configured to receive configuration information of a bandwidth part BWP from a network device, where the BWP includes at least a first bandwidth and a second bandwidth, the first bandwidth is determined based on a radio frequency bandwidth of a terminal device, and the second bandwidth is determined based on a baseband bandwidth of the terminal device; and a processing module, configured to communicate with the network device by using the BWP. These modules may perform corresponding functions in the method example in the first aspect. For details, refer to detailed descriptions in the method example. The details are not described herein again.

According to a fourth aspect, a communication apparatus is provided. For beneficial effects, refer to descriptions in the second aspect. Details are not described herein again. The communication apparatus has functions of implementing behavior in the method example in the second aspect. The functions may be implemented by hardware, or may be implemented by hardware executing corresponding software. The hardware or the software includes one or more modules corresponding to the foregoing functions. In a possible design, the communication apparatus includes: a transceiver module, configured to send configuration information of a bandwidth part BWP to a terminal device, where the BWP includes at least a first bandwidth and a second bandwidth, the first bandwidth is determined based on a radio frequency bandwidth of the terminal device, and the second bandwidth is determined based on a baseband bandwidth of the terminal device; and a processing module, configured to communicate with the terminal device by using the BWP. These modules may perform corresponding functions in the method example in the second aspect. For details, refer to detailed descriptions in the method example. The details are not described herein again.

According to a fifth aspect, a communication apparatus is provided. The communication apparatus may be the terminal device in the foregoing method embodiments or a chip disposed in the terminal device. The communication apparatus includes a communication interface and a processor, and optionally, further includes a storage. The storage is configured to store a computer program or instructions. The processor is coupled to the storage and the communication interface. When the processor executes the computer program or the instructions, the communication apparatus is enabled to perform the method performed by the terminal device in the foregoing method embodiments.

According to a sixth aspect, a communication apparatus is provided. The communication apparatus may be the network device in the foregoing method embodiments or a chip disposed in the network device. The communication apparatus includes a communication interface and a processor, and optionally, further includes a storage. The storage is configured to store a computer program or instructions. The processor is coupled to the storage and the communication interface. When the processor executes the computer program or the instructions, the communication apparatus is enabled to perform the method performed by the network device in the foregoing method embodiments.

According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the network device in the foregoing aspects is performed.

According to a ninth aspect, this application provides a chip system. The chip system includes a processor. The processor is configured to implement functions of the terminal device in the methods in the foregoing aspects. In a possible design, the chip system further includes a storage. The storage is configured to store program instructions and/or data. The chip system may include a chip, or may include a chip and another discrete device.

According to a tenth aspect, this application provides a chip system. The chip system includes a processor. The processor is configured to implement functions of the network device in the methods in the foregoing aspects. In a possible design, the chip system further includes a storage. The storage is configured to store program instructions and/or data. The chip system may include a chip, or may include a chip and another discrete device.

According to an eleventh aspect, this application provides a computer-readable storage medium. The computer-readable storage medium stores a computer program. When the computer program is run, the method performed by the terminal device in the foregoing aspects is implemented.

According to a twelfth aspect, this application provides a computer-readable storage medium. The computer-readable storage medium stores a computer program. When the computer program is run, the method performed by the network device in the foregoing aspects is implemented.

## BRIEF DESCRIPTION OF DRAWINGS

FIG. 1 is a diagram of a communication scenario to which an embodiment of this application is applicable;
FIG. 2 is a diagram of a communication method 200 according to an embodiment of this application;
FIG. 3 is a diagram of a frequency domain position 300 according to an embodiment of this application;
FIG. 4 is a diagram of another frequency domain position 400 according to an embodiment of this application;
FIG. 5 is a diagram of still another frequency domain position 500 according to an embodiment of this application;
FIG. 6 is a block diagram of a communication apparatus 600 according to an embodiment of this application; and
FIG. 7 is a block diagram of another communication apparatus 700 according to an embodiment of this application.

## DESCRIPTION OF EMBODIMENTS

The following describes technical solutions in embodiments of this application with reference to the accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a generic term of wearable devices such as glasses, gloves, watches, clothes, shoes that are intelligently designed and developed for daily wear by using wearable technologies. The wearable device is a portable device that is directly worn on a body or integrated into clothes or an accessory of a user. The wearable device is more than a hardware device. The wearable device implements powerful functions through software support, data exchange, and cloud interaction. Generalized wearable intelligent devices include full-featured and large-size devices that can implement complete or partial functions without depending on smartphones, such as smart watches or smart glasses, and devices that dedicated to only one type of application functions and need to be used together with other devices such as smartphones, such as various smart bands or smart jewelry for monitoring physical signs.

In addition, in embodiments of this application, the terminal device may alternatively be a terminal device in an IoT system. The IoT is an important component of further information technology development. A main technical feature of the IoT is to connect things to a network by using communication technologies, to implement an intelligent network for interconnection between a person and a machine or between things.

In embodiments of this application, an apparatus configured to implement functions of the terminal device may be a terminal device, or may be an apparatus that can support the terminal device in implementing the functions, for example, a chip system or a chip. The apparatus may be installed in the terminal device. In embodiments of this application, the chip system may include a chip, or may include a chip and another discrete device.

A network device in embodiments of this application may be a device configured to communicate with the terminal device. The network device may be a base station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, and a network device in a 5G network or a network device in a future evolved PLMN network, or one or a group of (including a plurality of antenna panels) antenna panels of a base station in a 5G system, or may be a network node that constitutes a gNB or a transmission point, for example, a baseband unit (baseband unit, BBU) or a distributed unit (distributed unit, DU). This is not limited in embodiments of this application.

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. The AAU implements some physical layer processing functions, and a function related to radio frequency processing and an active antenna. Information at the RRC layer is eventually converted into information at the PHY layer, or is converted from information at the PHY layer. Therefore, in this architecture, higher layer signaling, for example, RRC layer signaling, may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

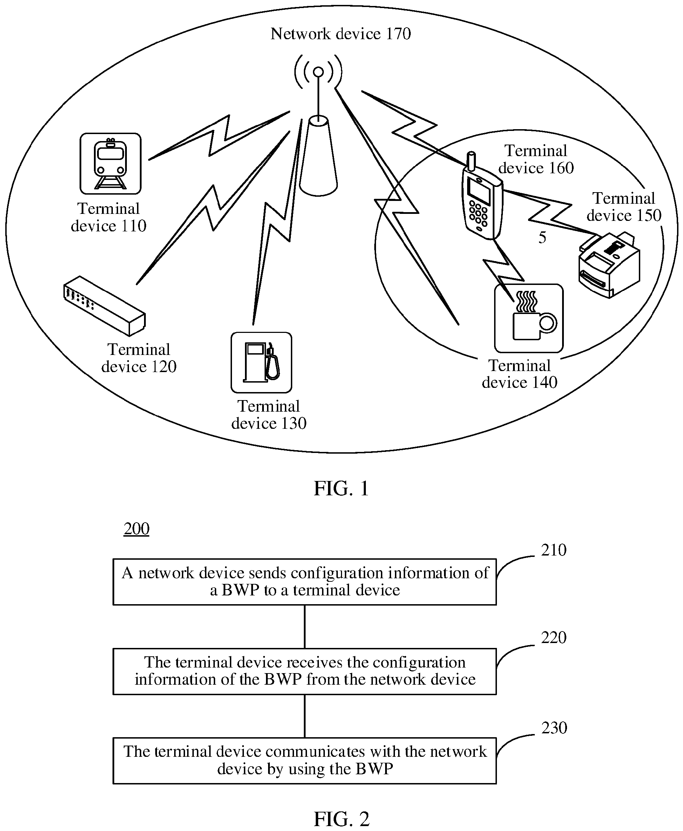

FIG. 1 is a diagram of a communication scenario to which an embodiment of this application is applicable. A communication system in FIG. 1 may include at least one terminal device (for example, a terminal device 110, a terminal device 120, a terminal device 130, a terminal device 140, a terminal device 150, and a terminal device 160) and a network device 170. The network device 170 is configured to provide a communication service for the terminal device and access a core network. The terminal device may access a network by searching for a synchronization signal, a broadcast signal, or the like sent by the network device 170, to establish communication with the network device. The terminal device 110, the terminal device 120, the terminal device 130, the terminal device 140, and the terminal device 160 in FIG. 1 may perform uplink and downlink transmission with the network device 170. For example, the network device 170 may send a downlink signal to the terminal device 110, the terminal device 120, the terminal device 130, the terminal device 140, and the terminal device 160, or may receive an uplink signal sent by the terminal device 110, the terminal device 120, the terminal device 130, the terminal device 140, and the terminal device 160.

In addition, the terminal device 140, the terminal device 150, and the terminal device 160 may alternatively be considered as one communication system. The terminal device 160 may send a downlink signal to the terminal device 140 and the terminal device 150, or may receive an uplink signal sent by the terminal device 140 and the terminal device 150.

It should be understood that the communication system may include one or more network devices. One network device may send a signal to one or more terminals. Alternatively, a plurality of network devices may simultaneously send signals to one or more terminals.

Currently, a concept of a bandwidth part (bandwidth part, BWP) is introduced in NR. The BWP is a part of continuous frequency domain resources on a carrier, and a resource block (resource block, RB) is usually used as a minimum frequency domain unit. In addition, one RB may include a plurality of subcarriers (subcarriers), and one resource block group (resource block group, RBG) includes one or more resource blocks. In the NR, a size of the RBG is configured by using a higher layer parameter. It should be noted that the size of the RBG mentioned in this application is understood as a quantity of resource blocks included in the RBG. BWPs may be classified into an uplink BWP and a downlink BWP based on uplink transmission and downlink transmission of data. A BWP used to transmit or receive uplink data is referred to as the uplink BWP, and a BWP used to transmit or receive downlink data is referred to as the downlink BWP.

The network device may send configuration information of the BWPs to the terminal device, to configure a plurality of BWPs for the terminal device. Usually, in consideration of complexity, a quantity of BWPs that can be configured by the network device for the terminal device is limited. For example, for one terminal device, the network device may configure a maximum of four BWPs, and frequency domain resources of different BWPs may overlap or may not overlap. When a quantity of BWPs configured by the network device for the terminal device is greater than 1, only one BWP is activated. When a size of a bandwidth of the activated BWP is less than or equal to a maximum bandwidth of the terminal device, the terminal device may communicate with the network device based on the activated BWP.

A bandwidth of the terminal device may include a radio frequency (radio frequency, RF) bandwidth and a baseband (baseband, BB) bandwidth. The radio frequency bandwidth may be a bandwidth of a radio frequency processing part. The radio frequency processing part may include at least one or more of the following functional blocks: an antenna array, a power amplifier, a filter, an RF transceiver, a duplexer, a converter, or the like. Alternatively, the radio frequency bandwidth may be a bandwidth of one or more functional blocks of a radio frequency link. The baseband bandwidth may be a bandwidth of a baseband processing part. The baseband processing part may include at least one or more of the following functional blocks: an analog-to-digital converter (analog-to-digital converter, ADC)/a digital-to-analog converter (digital-to-analog converter, DAC), channel coding/decoding, fast Fourier transform (fast Fourier transform, FFT)/inverse fast Fourier transform (inverse fast Fourier transform, IFFT) IFFF, a post-FFT data buffer, a reception processing block, a hybrid automatic retransmission request (hybrid automatic retransmission request, HARQ) buffer, downlink control processing and coding/decoding, a synchronization/cell search block, an uplink processing block, a multiple input multiple output (multiple input multiple output, MIMO) dedicated processing block, or the like. Alternatively, the baseband bandwidth may be a bandwidth of one or more functional blocks of the baseband processing part.

For a terminal device whose radio frequency bandwidth and baseband bandwidth are the same, a bandwidth of a BWP may be configured with reference to one of the radio frequency bandwidth and the baseband bandwidth. For example, when a size of a bandwidth of the BWP is less than or equal to a maximum radio frequency bandwidth of the terminal device, the size of the bandwidth of the BWP is also less than or equal to a maximum baseband bandwidth of the terminal device. However, for a terminal device whose radio frequency bandwidth and baseband bandwidth are different, when the network device configures a bandwidth of a BWP for the terminal device, it is unclear whether reference is made to the radio frequency bandwidth or the baseband bandwidth. An example in which the bandwidth of the BWP is configured with reference to the radio frequency bandwidth of the terminal device is used. When the size of the bandwidth of the BWP is less than or equal to the radio frequency bandwidth of the terminal device, the bandwidth of the BWP may be greater than the baseband bandwidth of the terminal device, or may be less than the baseband bandwidth of the BWP. When the bandwidth of the BWP is greater than the baseband bandwidth of the terminal device, a bandwidth used when the terminal device performs data transmission with the network device exceeds a baseband processing capability of the terminal device. Consequently, a transmission error occurs, and the terminal device cannot communicate with the network device.

In view of the foregoing technical problem, this application provides a communication method. According to the method, in this application, when a network device configures a bandwidth of a BWP for a terminal device, both a radio frequency bandwidth and a baseband bandwidth of the terminal device can be considered, so that the terminal device can perform signal transmission with the network device.

The following describes, in detail with reference to the accompanying drawings, embodiments provided in this application.

FIG. 2 is a diagram of a communication method 200 according to an embodiment of this application. As shown in FIG. 2, the method 200 may include the following steps.

210: A network device sends configuration information of a BWP to a terminal device.

For example, the BWP may include at least a first bandwidth and a second bandwidth. The first bandwidth is determined based on a radio frequency bandwidth of the terminal device, and the second bandwidth is determined based on a baseband bandwidth of the terminal device.

In other words, a bandwidth of the BWP configured by the network device for the terminal device may be divided into two parts, for example, denoted as the first bandwidth and the second bandwidth respectively. The first bandwidth may be configured based on the radio frequency bandwidth, and the second bandwidth may be configured based on the baseband bandwidth. In this case, terminal devices having a plurality of bandwidth capabilities may be considered for configuration of the bandwidth of the BWP. For example, the radio frequency bandwidth of the terminal device and the baseband bandwidth of the terminal device may be the same. For another example, the radio frequency bandwidth of the terminal device and the baseband bandwidth of the terminal device may be different.

In a possible manner, the radio frequency bandwidth of the terminal device and the baseband bandwidth of the terminal device are the same. In this manner, when a size of the first bandwidth is less than the radio frequency bandwidth of the terminal device, the size of the first bandwidth is also less than the baseband bandwidth of the terminal device. When a size of the second bandwidth is less than the radio frequency bandwidth of the terminal device, the size of the second bandwidth is also less than the baseband bandwidth of the terminal device.

In another possible manner, the radio frequency bandwidth of the terminal device and the baseband bandwidth of the terminal device are different. In this manner, when a size of the first bandwidth is less than the radio frequency bandwidth of the terminal device, the size of the first bandwidth may be greater than the baseband bandwidth of the terminal device. When a size of the second bandwidth is less than the radio frequency bandwidth of the terminal device, the size of the second bandwidth may be greater than the baseband bandwidth of the terminal device.

220: The terminal device receives the configuration information of the BWP from the network device.

230: The terminal device communicates with the network device by using the BWP.

Based on the foregoing technical solutions, both the radio frequency bandwidth and the baseband bandwidth may be considered for the BWP configured by the network device for the terminal device, so that the BWP is applicable to a terminal device whose radio frequency bandwidth and baseband bandwidth are the same, and is also applicable to a terminal device whose radio frequency bandwidth and baseband bandwidth are different. Therefore, according to the foregoing solutions, terminal devices having different bandwidth capabilities can access the network device, and further communicate with the network device.

For example, the first bandwidth may indicate a maximum range of a frequency domain resource used by the terminal device to receive or send a signal, and the second bandwidth may indicate a maximum transmission bandwidth of the frequency domain resource used by the terminal device to receive or send the signal.

The maximum range limits a range of the frequency domain resource used by the terminal device to receive or send the signal, and the maximum transmission bandwidth limits a maximum value of a bandwidth used by the terminal device to receive or send the signal. For example, assuming that the maximum transmission bandwidth of the frequency domain resource used by the terminal device to receive or send the signal is 5 MHz, the bandwidth used by the terminal device to receive or send the signal should be less than or equal to 5 MHz. For another example, assuming that the maximum transmission bandwidth of the frequency domain resource used by the terminal device to receive or send the signal is 10 MHz, the bandwidth used by the terminal device to receive or send the signal should be less than or equal to 10 MHz.

For example, the second bandwidth is configured based on the terminal device, or the second bandwidth is configured based on the signal received or sent by the terminal device.

In a possible manner, the second bandwidth is configured based on the terminal device. In this case, the bandwidth used by the terminal device to receive or send the signal is determined based on the second bandwidth, and the bandwidth used by the terminal device to receive or send the signal is less than or equal to the second bandwidth. For example, when the size of the second bandwidth is greater than the radio frequency bandwidth of the terminal device, the bandwidth used by the terminal device to receive or send the signal may also be greater than the radio frequency bandwidth of the terminal device.

In another possible manner, the second bandwidth is configured based on the signal received or sent by the terminal device. Because different signals may correspond to different bandwidths, configurations of the second bandwidth are also different. For example, for a signal whose bandwidth is less than or equal to the radio frequency bandwidth of the terminal device, for example, a signal whose transmission is performed on a physical downlink shared channel (physical downlink shared channel, PDSCH), or a signal whose transmission is performed on a physical uplink shared channel (physical uplink shared channel, PUSCH), the size of the second bandwidth is also less than or equal to the radio frequency bandwidth of the terminal device in this case. For another example, for a signal whose bandwidth is greater than the radio frequency bandwidth of the terminal device, for example, a signal whose transmission is performed on a physical broadcast channel (physical broadcast channel, PBCH), the second bandwidth is also greater than the radio frequency bandwidth of the terminal device in this case. It should be understood that, regardless of whether the bandwidth of the signal is greater than the baseband bandwidth of the terminal device, the bandwidth of the signal is always not greater than the second bandwidth.

For example, the configuration information of the BWP includes at least a frequency domain position of the first bandwidth. A frequency domain position of the second bandwidth is determined based on the frequency domain position of the first bandwidth.

In a possible manner, the frequency domain position of the second bandwidth is determined based on an offset and the frequency domain position of the first bandwidth. The offset is an offset of the frequency domain position of the second bandwidth relative to the frequency domain position of the first bandwidth.

It should be understood that the configuration information of the BWP may include the frequency domain position of the second bandwidth, or may not include the frequency domain position of the second bandwidth. When the configuration information of the BWP does not include the frequency domain position of the second bandwidth, the offset may be indicated by the network device by using signaling. For example, the offset may be indicated by using downlink control information (downlink control information, DCI), or may be indicated by using radio resource control (radio resource control, RRC). Alternatively, the offset may be a capability value of the terminal device, or may be predefined in a protocol. This is not limited in this embodiment of this application.

For example, the second bandwidth is located in a frequency domain resource range determined based on the first bandwidth and the frequency domain position of the first bandwidth.

For example, the second bandwidth has one or more frequency domain positions.

For example, M frequency domain resources determined based on the second bandwidth and N frequency domain positions of the second bandwidth are M sub-BWPs in the BWP, where N and M are positive integers.

It should be understood that N may be greater than M, may be equal to M, or may be less than M. Values of N and M are not limited in this embodiment of this application. When N is equal to M, determining N frequency domain resources based on the second bandwidth and the N frequency domain positions of the second bandwidth is a preferred manner.

In a possible manner, the second bandwidth has one frequency domain position, one frequency domain resource may be determined based on the second bandwidth and the frequency domain position of the second bandwidth, and the frequency domain resource may be one sub-BWP in the BWP.

In another possible manner, the second bandwidth has a plurality of frequency domain positions, and a plurality of frequency domain resources may be determined based on the second bandwidth and the frequency domain positions of the second bandwidth. The plurality of frequency domain resources may be defined as a plurality of sub-BWPs in the BWP. For example, the second bandwidth has five frequency domain positions. In this case, five frequency domain resources may be determined based on the second bandwidth and the frequency domain positions of the second bandwidth, and each frequency domain resource may be one sub-BWP in the BWP. For another example, the second bandwidth has five frequency domain positions. In this case, more than or less than five frequency domain resources may be determined based on the second bandwidth and the frequency domain positions of the second bandwidth, and each frequency domain resource may be one sub-BWP in the BWP.

According to step 210, a size relationship between the first bandwidth and the second bandwidth and the radio frequency bandwidth of the terminal device and the baseband bandwidth of the terminal device may include the following four manners.

Manner #1: The size of the first bandwidth is less than or equal to a maximum radio frequency bandwidth of the terminal device, and the size of the second bandwidth is less than or equal to a maximum baseband bandwidth of the terminal device.

In other words, in this case, the bandwidth used by the terminal device to receive or send the signal is less than or equal to the maximum baseband bandwidth of the terminal device. For example, assuming that the maximum radio frequency bandwidth of the terminal device is 20 MHz, and the maximum baseband bandwidth of the terminal device is 5 MHz, the size of the first bandwidth should be less than or equal to 20 MHz, the size of the second bandwidth should be less than or equal to 5 MHz, and the bandwidth used by the terminal device to receive or send the signal is less than or equal to 5 MHz.

For example, the second bandwidth is configured based on the terminal device, or the second bandwidth is configured based on the signal received or sent by the terminal device. For example descriptions of two configuration manners of the second bandwidth, refer to descriptions in step 230. Details are not described herein again.

Based on the foregoing technical solutions, when the size of the first bandwidth is less than or equal to the maximum radio frequency bandwidth of the terminal device, and the size of the second bandwidth is less than or equal to the maximum baseband bandwidth of the terminal device, a bandwidth of the frequency domain resource used by the terminal device to transmit or receive the signal is less than or equal to the maximum baseband bandwidth of the terminal device. In this case, a baseband of the terminal device does not need to process a data block that exceeds a bandwidth capability of the terminal device. Therefore, a processing delay is not increased, and this also helps reduce an overall transmission delay of the signal.

Manner #2: Both the size of the first bandwidth and the size of the second bandwidth are less than or equal to a maximum radio frequency bandwidth of the terminal device, and are greater than a maximum baseband bandwidth of the terminal device.

In other words, in this case, the bandwidth used by the terminal device to receive or send the signal is less than or equal to the maximum radio frequency bandwidth of the terminal device, and may be greater than the maximum baseband bandwidth of the terminal device. For example, assuming that the maximum radio frequency bandwidth of the terminal device is 20 MHz, and the maximum baseband bandwidth of the terminal device is 5 MHz, both the size of the first bandwidth and the size of the second bandwidth should be less than or equal to 20 MHz, and may be greater than 5 MHz. In this case, the bandwidth used by the terminal device to receive or send the signal may be greater than 5 MHz, and may be less than or equal to 20 MHz.

For example, a processing delay of a first channel/first signal of the terminal device is greater than a processing delay of a first channel/first signal of a second terminal device. A bandwidth of the first channel/first signal of the terminal device is greater than the maximum baseband bandwidth of the terminal device, and the bandwidth of the first channel/first signal of the terminal device is less than or equal to the maximum radio frequency bandwidth of the terminal device. A bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device.

The first channel may be one of all channels of the terminal device or the second terminal device. The first signal may be a reference signal. For example, the first signal may be one of all reference signals of the terminal device or the second terminal device. A specific form of the first channel/first signal is not limited in this embodiment of this application. For example, the first channel may be a PDSCH, or the first channel may be a PUSCH. For another example, the first signal may be a channel state indication reference signal (channel state information-reference signal, CSI-RS), or the first signal may be a sounding reference signal (sounding reference signal, SRS).

The maximum baseband bandwidth of the terminal device is less than the maximum baseband bandwidth of the second terminal device, and the maximum radio frequency bandwidth of the terminal device may be equivalent to a processing capability of the maximum radio frequency bandwidth of the second terminal device. Alternatively, the maximum baseband bandwidth of the terminal device is less than the maximum baseband bandwidth of the second terminal device, and the maximum radio frequency bandwidth of the terminal device is also less than the maximum radio frequency bandwidth of the second terminal device.

It should be understood that, for the terminal device in which the bandwidth of the first channel/first signal is greater than the maximum baseband bandwidth and is less than or equal to the maximum radio frequency bandwidth, because the bandwidth of the first channel/first signal is less than or equal to the maximum radio frequency bandwidth, the terminal device may completely receive, at a same moment, a signal whose transmission is performed on the first channel/first signal. Because the bandwidth of the first channel/first signal is greater than the maximum baseband bandwidth, a delay of processing the signal by a baseband of the terminal device is increased.

For example, the maximum radio frequency bandwidth of the terminal device is 20 MHz, the maximum baseband bandwidth of the terminal device is 5 MHz, the maximum radio frequency bandwidth of the second terminal device is 20 MHz, and the maximum baseband bandwidth of the second terminal device is 20 MHz.

An example in which the first channel is a PDSCH is used. It is assumed that a bandwidth of the PDSCH is 10 MHz. For the second terminal device, the bandwidth (10 MHz) of the PDSCH is less than the maximum radio frequency bandwidth (20 MHz) of the second terminal device. In this case, a radio frequency part of the second terminal device may completely receive a signal whose transmission is performed on the PDSCH. The bandwidth (10 MHz) of the PDSCH is less than the maximum baseband bandwidth (20 MHz) of the second terminal device. In this case, a baseband part of the second terminal device may complete processing of the signal. For the terminal device, the bandwidth (10 MHz) of the PDSCH is less than the maximum radio frequency bandwidth (20 MHz) of the terminal device. In this case, the terminal device may completely receive the signal whose transmission is performed on the PDSCH. The bandwidth (10 MHz) of the PDSCH is greater than the maximum baseband bandwidth (5 MHz) of the terminal device. In comparison with a processing delay of the baseband part of the second terminal device, in this case, a baseband part of the terminal device needs to increase a processing delay to complete processing of the signal. For example, the processing delay may be a processing delay from receiving the PDSCH by the terminal device to sending, by the terminal device, a PUCCH carrying a HARQ-ACK of the PDSCH. A delay T1 of processing the signal by the second terminal device is used as an example. A delay of processing the signal by the terminal device is T1+delta1, where delta1 is time by which the delay of processing the signal by the terminal device is increased over the delay of processing the signal by the second terminal device.

An example in which the first channel is a PUSCH is used. It is assumed that a bandwidth of the PUSCH is 8 MHz. For the second terminal device, the bandwidth (8 MHz) of the PUSCH is less than the maximum radio frequency bandwidth (20 MHz) of the second terminal device. In this case, a radio frequency part of the second terminal device may completely send a signal whose transmission is performed on the PUSCH. The bandwidth (8 MHz) of the PUSCH is less than the maximum baseband bandwidth (20 MHz) of the second terminal device. In this case, a baseband part of the second terminal device may complete processing of the signal. For the terminal device, the bandwidth (8 MHz) of the PUSCH is less than the maximum radio frequency bandwidth (20 MHz) of the terminal device. In this case, the terminal device may completely send the signal whose transmission is performed on the PUSCH. The bandwidth (8 MHz) of the PUSCH is greater than the maximum baseband bandwidth (5 MHz) of the terminal device. In comparison with a delay of the baseband part of the second terminal device, in this case, a baseband part of the terminal device needs to increase a processing delay to complete processing of the signal. For example, the processing delay may be a processing delay from receiving, by the terminal device, a physical downlink control channel (physical downlink control channel, PDCCH) carrying DCI of the PUSCH to sending the PUSCH by the terminal device. A delay T2 of processing the signal by the second terminal device is used as an example. A delay of processing the signal by the terminal device is T2+delta2, where delta2 is time by which the delay of processing the signal by the terminal device is increased over the delay of processing the signal by the second terminal device.

An example in which the first signal is a CSI-RS is used. It is assumed that a bandwidth of the CSI-RS is 15 MHz. For the second terminal device, the bandwidth (15 MHz) of the CSI-RS is less than the maximum radio frequency bandwidth (20 MHz) of the second terminal device. In this case, a radio frequency part of the second terminal device may completely receive a signal whose transmission is performed on the CSI-RS. The bandwidth (15 MHz) of the CSI-RS is less than the maximum baseband bandwidth (20 MHz) of the second terminal device. In this case, a baseband part of the second terminal device may complete processing of the signal. For the terminal device, the bandwidth (15 MHz) of the CSI-RS is less than the maximum radio frequency bandwidth (20 MHz) of the terminal device. In this case, the terminal device may completely receive the signal whose transmission is performed on the CSI-RS. The bandwidth (15 MHz) of the CSI-RS is greater than the maximum baseband bandwidth (5 MHz) of the terminal device. In comparison with a delay of the baseband part of the second terminal device, in this case, a baseband part of the terminal device needs to increase a processing delay to complete processing of the signal. For example, the processing delay may be a processing delay from receiving, by the terminal device, DCI for triggering CSI measurement feedback to reporting channel state information by the terminal device. The channel state information may include one or more of the following: a reference signal received power (reference signal received power, RSRP), a signal to interference plus noise ratio (signal to interference plus noise ratio, SINR), a channel quality indication (channel quality indication, CQI), a rank indicator (rank indicator, RI), a precoding matrix indicator (precoding matrix indicator, PMI), or a linear indicator (linear indicator, LI). A delay T3 of processing the signal by the second terminal device is used as an example. A delay of processing the signal by the terminal device is T3+delta3, where delta3 is time by which the delay of processing the signal by the terminal device is increased over the delay of processing the signal by the second terminal device.

It should be understood that, for second terminal devices having different bandwidth capabilities, time by which the processing delay of the first channel/first signal of the terminal device is increased over a processing delay of a first channel/first signal of each of the second terminal devices may be different. This specifically depends on the processing capabilities of the second terminal devices. For example, it is assumed that there are two second terminal devices, baseband bandwidths of the two second terminal devices are respectively 20 MHz and 50 MHz, and the baseband bandwidth of the terminal device is 5 MHz. If a processing delay of a first channel/first signal of a second terminal device whose baseband bandwidth is 50 MHz is T4, a processing delay of a first channel/first signal of a second terminal device whose baseband bandwidth is 20 MHz is T4+delta4, the processing delay of the first channel/first signal of the terminal device is T4+delta5, and delta4 is less than delta5.

For example, the second bandwidth is configured based on the terminal device, or the second bandwidth is configured based on the signal received or sent by the terminal device. For example descriptions of two configuration manners of the second bandwidth, refer to descriptions in step 230. Details are not described herein again.

Based on the foregoing technical solutions, when both the size of the first bandwidth and the size of the second bandwidth are less than or equal to the maximum radio frequency bandwidth of the terminal device, and are greater than the maximum baseband bandwidth of the terminal device, a bandwidth of the frequency domain resource used by the terminal device to transmit or receive the signal may be greater than the maximum baseband bandwidth of the terminal device on a premise that the bandwidth of the frequency domain resource is less than or equal to the maximum radio frequency bandwidth of the terminal device. In this case, a radio frequency of the terminal device may receive all signals, and no data is lost. In addition, a baseband of the terminal device may increase a delay to complete processing of a large data block.

Manner #3: Both the size of the first bandwidth and the size of the second bandwidth are less than or equal to a maximum radio frequency bandwidth of the terminal device, and are less than or equal to a maximum baseband bandwidth of the terminal device.

In other words, in this case, both the size of the first bandwidth and the size of the second bandwidth should be less than or equal to a smaller value between the maximum radio frequency bandwidth and the maximum baseband bandwidth of the terminal device, and the bandwidth used by the terminal device to receive or send the signal is less than or equal to the maximum radio frequency bandwidth of the terminal device and is also less than or equal to the maximum baseband bandwidth of the terminal device. In other words, the bandwidth used by the terminal device to receive or send the signal is less than or equal to the smaller value between the maximum radio frequency bandwidth and the maximum baseband bandwidth of the terminal device. For example, it is assumed that the maximum radio frequency bandwidth of the terminal device is 20 MHz, and the maximum baseband bandwidth of the terminal device is 5 MHz. In this case, both the size of the first bandwidth and the size of the second bandwidth should be less than or equal to 20 MHz, and should be less than or equal to 5 MHz. In other words, both the size of the first bandwidth and the size of the second bandwidth should be less than or equal to 5 MHz (a smaller value between 20 MHz and 5 MHz), and the bandwidth used by the terminal device to receive or send the signal is less than or equal to 5 MHz (the smaller value between 20 MHz and 5 MHz).

For example, the second bandwidth is configured based on the terminal device, or the second bandwidth is configured based on the signal received or sent by the terminal device. For example descriptions of two configuration manners of the second bandwidth, refer to descriptions in step 230. Details are not described herein again.

It should be understood that, in this manner, only one of the first bandwidth and the second bandwidth may be configured, or the first bandwidth and the second bandwidth may be separately configured. This is not limited in this embodiment of this application.

Based on the foregoing technical solutions, when both the size of the first bandwidth and the size of the second bandwidth are less than or equal to the maximum radio frequency bandwidth of the terminal device, and are less than or equal to the maximum baseband bandwidth of the terminal device, a bandwidth of the frequency domain resource used by the terminal device to transmit or receive the signal is not greater than the maximum radio frequency bandwidth of the terminal device and is also not greater than the maximum baseband bandwidth of the terminal device. In this case, the terminal device may directly reuse an existing BWP mechanism, an NR protocol is slightly modified, and a performance loss is also reduced.

Manner #4: Both the size of the first bandwidth and the size of the second bandwidth are greater than a maximum radio frequency bandwidth of the terminal device, and are greater than a maximum baseband bandwidth of the terminal device.

In other words, in this case, both the size of the first bandwidth and the size of the second bandwidth may be greater than a larger value between the maximum radio frequency bandwidth and the maximum baseband bandwidth of the terminal device, and the bandwidth used by the terminal device to receive or send the signal may be greater than the maximum radio frequency bandwidth of the terminal device and may also be greater than the maximum baseband bandwidth of the terminal device. In other words, the bandwidth used by the terminal device to receive or send the signal may be greater than the larger value between the maximum radio frequency bandwidth of the terminal device and the maximum baseband bandwidth of the terminal device. For example, it is assumed that the maximum radio frequency bandwidth of the terminal device is 20 MHz, and the maximum baseband bandwidth of the terminal device is 5 MHz. In this case, both the size of the first bandwidth and the size of the second bandwidth may be greater than 20 MHz, and may be greater than 5 MHz. In other words, both the first bandwidth and the second bandwidth may be greater than 20 MHz (a larger value between 20 MHz and 5 MHz), and the bandwidth used by the terminal device to receive or send the signal may be greater than 20 MHz.

For example, a processing delay of a first channel/first signal of the terminal device is greater than a processing delay of a first channel/first signal of a second terminal device. A bandwidth of the first channel/first signal of the terminal device is greater than the maximum baseband bandwidth of the terminal device, and the bandwidth of the first channel/first signal of the terminal device is greater than the maximum radio frequency bandwidth of the terminal device. A bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device.

The first channel may be one of all channels of the terminal device or the second terminal device. The first signal may be a reference signal, and the first signal may be one of all reference signals of the terminal device or the second terminal device. A specific form of the first channel/first signal is not limited in this embodiment of this application. For example, the first channel may be a PBCH.

The maximum baseband bandwidth of the terminal device is less than the maximum baseband bandwidth of the second terminal device, or the maximum radio frequency bandwidth of the terminal device is less than the maximum radio frequency bandwidth of the second terminal device.

It should be understood that, for the terminal device in which the bandwidth of the first channel/first signal is greater than the maximum baseband bandwidth and the bandwidth of the first channel/first signal is greater than the maximum radio frequency bandwidth, the terminal device cannot completely receive, at a same moment, a signal whose transmission is performed on the first channel/first signal, but can receive only a part of the signal at a current moment. For a repeatedly sent signal, the terminal device may separately receive a part of the signal on different frequency domain resources at different moments, and combine the received part of the signal, to completely receive the signal. In this case, the processing delay of the first channel/first signal of the terminal device is increased.

The following describes an example in which the processing delay of the first channel/first signal of the terminal device is greater than the processing delay of the first channel/first signal of the second terminal device in Manner #4.

For example, the maximum radio frequency bandwidth of the terminal device is 5 MHz, the maximum baseband bandwidth of the terminal device is 5 MHz, the maximum radio frequency bandwidth of the second terminal device is 20 MHz, and the maximum baseband bandwidth of the second terminal device is 20 MHz.

An example in which the first channel is a PBCH is used. It is assumed that a bandwidth of the PBCH is 7.2 MHz. For the second terminal device, the bandwidth (7.2 MHz) of the PBCH is less than the maximum radio frequency bandwidth (20 MHz) of the second terminal device. In this case, the second terminal device may completely receive a signal whose transmission is performed on the PBCH. The bandwidth (7.2 MHz) of the PBCH is also less than the maximum baseband bandwidth (20 MHz) of the second terminal device. In this case, a baseband part of the second terminal device may complete processing of the signal. For the terminal device, the bandwidth (7.2 MHz) of the PBCH is greater than the maximum radio frequency bandwidth (5 MHz) of the terminal device, and the bandwidth (7.2 MHz) of the PBCH is also greater than the maximum baseband bandwidth (5 MHz) of the terminal device. Therefore, the terminal device cannot completely receive, at a same moment, the signal whose transmission is performed on the PBCH, and can receive only a part of the signal at a current moment. For a repeatedly sent signal, the terminal device may combine a plurality of received parts of the signal, to completely receive the signal. In comparison with a delay of processing the signal by the second terminal device, in this case, the terminal device needs to increase a processing delay to complete processing of the signal. A delay T6 of processing the signal by the second terminal device is used as an example. A delay of processing the signal by the terminal device is T6+delta6, where delta6 is time by which the delay of processing the signal by the terminal device is increased over the delay of processing the signal by the second terminal device.

It should be understood that, for second terminal devices having different bandwidth capabilities, time by which the processing delay of the first channel/first signal of the terminal device is increased over a processing delay of a first channel/first signal of each of the second terminal devices may be different. This specifically depends on the processing capabilities of the second terminal devices. For specific example descriptions, refer to descriptions in Manner #2. Details are not described herein again.

For example, the second bandwidth is configured based on the terminal device, or the second bandwidth is configured based on the signal received or sent by the terminal device. For example descriptions of two configuration manners of the second bandwidth, refer to descriptions in step 230. Details are not described herein again.

It should be understood that, in this manner, only one of the first bandwidth and the second bandwidth may be configured, or the first bandwidth and the second bandwidth may be separately configured. This is not limited in this embodiment of this application.

Based on the foregoing technical solutions, when both the size of the first bandwidth and the size of the second bandwidth are greater than the maximum radio frequency bandwidth of the terminal device, and are greater than the maximum baseband bandwidth of the terminal device, a bandwidth of the frequency domain resource used by the terminal device to transmit or receive the signal may be greater than the maximum radio frequency bandwidth of the terminal device, or may be greater than the maximum baseband bandwidth of the terminal device. In this case, the terminal device may directly reuse the existing signal to communicate with the network device. For example, the terminal device reuses an existing synchronization signal/PBCH block (synchronization signal/PBCH block, SSB) and system information block (system information block, SIB) to communicate with the network device, so that resource overheads can be reduced.

It should be understood that, in addition to the foregoing four manners, the size relationship between the first bandwidth and the second bandwidth and the radio frequency bandwidth of the terminal device and the baseband bandwidth of the terminal device may further include another manner. For example, the size of the first bandwidth is greater than the maximum radio frequency bandwidth of the terminal device and is greater than the maximum baseband bandwidth of the terminal device, and the size of the second bandwidth is less than or equal to the maximum radio frequency bandwidth of the terminal device and is less than or equal to the maximum baseband bandwidth of the terminal device. This is not limited in this embodiment of this application.

For example, frequency domain resource allocation of the physical downlink shared channel PDSCH/physical uplink shared channel PUSCH is determined based on the first bandwidth and the second bandwidth.

There may be two types of the frequency domain resource allocation of the PDSCH/PUSCH: type 0 frequency domain resource allocation and type 1 frequency domain resource allocation.

For the frequency domain resource allocation whose type is the type 0, the frequency domain resource allocation of this type is discontinuous frequency domain resource allocation, and a manner of the frequency domain resource allocation is as follows. Resource blocks in the BWP are grouped into $N_{RBG}$ resource block groups, so that each resource block group includes Y continuous resource blocks, and the $N_{RBG}$ resource block groups are in one-to-one correspondence with $N_{RBG}$ bits. When the network device pre-uses a resource block group to communicate with the terminal device, the terminal device sets a bit corresponding to the resource block group to "1". When the network device does not pre-use a resource block group to communicate with the terminal device, the terminal device sets a bit corresponding to the resource block group to "0". Therefore, the type 0 may indicate, by using a bitmap or a bitmap, a resource block group in the BWP allocated to the PDSCH/PUSCH for use.

For example, for the frequency domain resource allocation whose type is the type 0, a quantity of resource block groups included in the BWP is determined based on the first bandwidth and the second bandwidth. A quantity of resource blocks included in the BWP is determined based on the first bandwidth, and a size of the resource block group is determined based on the second bandwidth.

The quantity of resource block groups (in other words, a length of a resource indicator field) included in the BWP satisfies Formula (1):

$$N_{RBG} = \left\lceil \left( N_{BWP,i}^{size} + \left( N_{BWP,i}^{start} \bmod P \right) \right) / P \right\rceil \tag{1}$$

$N_{RBG}$ is the quantity of resource block groups, $N_{BWP}^{size}$ is the size of the first bandwidth, $N_{BWP}^{start}$ is a start resource block in the BWP, mod is a modulo operation, and $P$ is the size of the resource block group. The size of the resource block group may be determined based on the following descriptions.

A size of a 1st resource block group satisfies Formula (2):

$$P_0^{size} = P - N_{BWP}^{start} \bmod P \tag{2}$$

A size of a last resource block group satisfies Formula (3):
If

$$(N_{BWP}^{start} + N_{BWP}^{size}) \bmod P > 0, \quad P_{last}^{size} = (N_{BWP}^{start} + N_{BWP}^{size}) \bmod P . \text{ Otherwise, } P_{last}^{size} = P \tag{3}.$$

A size of another resource block group is equal to P.

A value of P may be determined based on Table 1. As shown in Table 1, a 1st column provides a range of the size of the second bandwidth, and a 2nd column (a size 1 of the resource block group) and a 3rd column (a size 2 of the resource block group) may be configured by the network device by using RRC signaling. When the size of the second bandwidth is determined, a size of a corresponding resource block group may be set to a value corresponding to one of the 2nd column and the 3rd column. For example, when the size of the second bandwidth is 100, the size of the resource block group may be 8 corresponding to the size 1 of the resource block group, or may be 16 corresponding to the size 2 of the resource block group.

**Table 1**

| Size of the second bandwidth | Size 1 of the resource block group | Size 2 of the resource block group |
|---|---|---|
| 1 to 36 | 2 | 4 |
| 37 to 72 | 4 | 8 |
| 73 to 144 | 8 | 16 |
| 145 to 275 | 16 | 16 |

Therefore, if the frequency domain resource allocation is configured as only the type 0, a bit length of a frequency domain resource allocation indicator field or a quantity of frequency domain resource allocation indicator fields is $N_{RBG}$ determined through the foregoing process.

For the frequency domain resource allocation whose type is the type 1, the frequency domain resource allocation of this type is continuous frequency domain resource allocation. A resource indicator field of the frequency domain resource allocation includes one resource indication value (resource indication value, RIV), and the RIV is related to one start resource block and a length of one continuously allocated resource block.

For example, for the frequency domain resource allocation whose type is the type 1, the RIV is determined based on the first bandwidth and the second bandwidth.

The RIV may be determined according to the following formula.

If $(L_{RBs} - 1) \leq \lfloor N_{BWP}^{size} / 2 \rfloor$, a value of the RIV satisfies Formula (4):

$$RIV = N_{BWP}^{size}(L_{RBs} - 1) + RB_{start} \tag{4}$$

Otherwise, a value of the RIV satisfies Formula (5):

$$RIV = N_{BWP}^{size}(N_{BWP}^{size} - L_{RBs} + 1) + (N_{BWP}^{size} - 1 - RB_{start}) \tag{5}$$

$N_{BWP}^{size}$ is the size of the first bandwidth, $L_{RBs}$ is the length of the continuously allocated resource block, $RB_{start}$ is the

start resource block. In addition, $1 \leq L_{RBs} \leq N_{BWP}^{size\_second} - RB_{start}$, and $N_{BWP}^{size\_second}$ is the size of the second bandwidth.

Therefore, if the frequency domain resource allocation is configured as only the type 1, a bit length of a frequency domain resource allocation indicator field or a quantity of frequency domain resource allocation indicator fields satisfies Formula (6):

$$\left\lceil \log_2 \left( N_{BWP}^{size\_second}(N_{BWP}^{size} - N_{BWP}^{size\_second}) + \frac{N_{BWP}^{size\_second}(N_{BWP}^{size\_second} + 1)}{2} \right) \right\rceil \tag{6}$$

$N_{BWP}^{size}$ is the size of the first bandwidth, and $N_{BWP}^{size\_second}$ is the size of the second bandwidth.

Further, through analysis of Formula (1) and Formula (6), if the frequency domain resource allocation is configured as *'dynamicSwitch',* the bit length of the frequency domain resource allocation indicator field or the quantity of frequency domain resource allocation indicator fields satisfies Formula (7):

$$\max \left( \left\lceil \log_2 \left( N_{BWP}^{size\_second}(N_{BWP}^{size} - N_{BWP}^{size\_second}) + \frac{N_{BWP}^{size\_second}(N_{BWP}^{size\_second} + 1)}{2} \right) \right\rceil, N_{RBG} \right) + 1 \tag{7}$$

A most significant bit of the frequency domain resource allocation indicator field indicates whether the resource allocation is the type 0 resource allocation or the type 1 resource allocation. For example, when the most significant bit indicates that the resource allocation is the type 0 resource allocation, $N_{RBG}$ least significant bits provide the frequency domain resource allocation. For another example, when the most significant bit indicates that the resource allocation is

$$\left\lceil \log_2 \left( N_{BWP}^{size\_second}(N_{BWP}^{size} - N_{BWP}^{size\_second}) + \frac{N_{BWP}^{size\_second}(N_{BWP}^{size\_second} + 1)}{2} \right) \right\rceil$$

the type 1 resource allocation, least significant bits provide the frequency domain resource allocation.

Based on the foregoing technical solutions, the frequency domain resource allocation of the PDSCH/PUSCH may be determined based on both the first bandwidth and the second bandwidth, so that a frequency diversity gain or a frequency selective scheduling gain can be ensured, a granularity of the resource block group is reduced, frequency domain resource utilization is improved, and detection performance of a frequency domain resource of the PDSCH/PUSCH is improved.

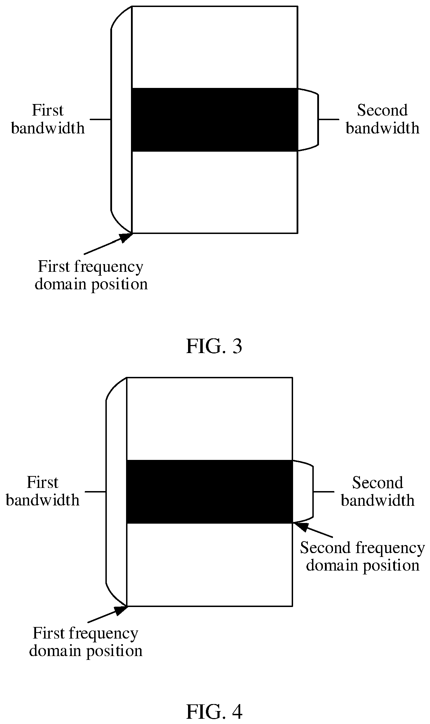

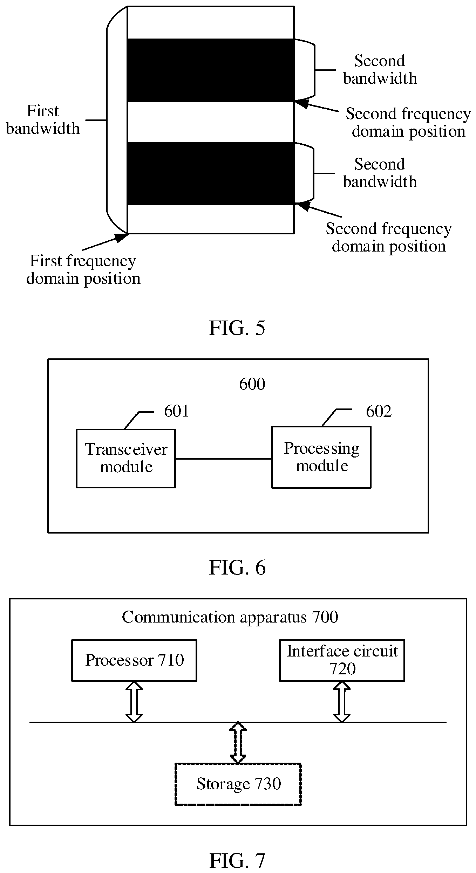

For ease of understanding, the following describes, with reference to FIG. 3 to FIG. 5, diagrams of several frequency domain positions applicable to embodiments of this application. FIG. 3 mainly describes a method for determining a frequency domain position of a second bandwidth when configuration information of a BWP does not include the frequency domain position of the second bandwidth. FIG. 4 mainly describes a method for determining a frequency domain position of a second bandwidth when configuration information of a BWP includes one frequency domain position of the second bandwidth. FIG. 5 mainly describes a method for determining frequency domain positions of a second bandwidth when configuration information of a BWP includes a plurality of frequency domain positions of the second bandwidth. The determining of the frequency domain position shown in FIG. 3, FIG. 4, and FIG. 5 may be used in any one of the four manners (to be specific, Manner #1, Manner #2, Manner #3, and Manner #4) in step 210, so that a terminal device can dynamically send or receive a signal on a frequency domain resource of a first bandwidth, and when a size of the first bandwidth is less than or equal to a maximum radio frequency bandwidth of the terminal device, the terminal device may not readjust a radio frequency when switching the frequency domain position of the second bandwidth. Therefore, a switching delay of the terminal device is reduced, and the terminal device can also obtain a larger frequency diversity gain.

FIG. 3 is a diagram of a frequency domain position 300 according to an embodiment of this application.

For example, configuration information of a BWP includes at least a frequency domain position of a first bandwidth. A frequency domain position of a second bandwidth is determined based on the frequency domain position of the first bandwidth.

In a possible manner, the frequency domain position of the second bandwidth is determined based on an offset and the frequency domain position of the first bandwidth. The offset is an offset of the frequency domain position of the second bandwidth relative to the frequency domain position of the first bandwidth.

For example, the offset may be indicated by a network device by using signaling. For example, the offset may be indicated by the network device by using DCI. Specifically, the offset may be indicated by the network device by using a frequency domain resource (frequency domain resource allocation, FDRA) indicator field in the DCI. For another example, the offset may be indicated by a network device by using RRC. For another example, the offset may be indicated by a network device by using a media access control control element (media access control control element, MAC CE). Alternatively, the offset may be a capability value of a terminal device, or may be predefined in a protocol. This is not limited in this embodiment of this application.

For example, the second bandwidth is located in a frequency domain resource range determined based on the first bandwidth and the frequency domain position of the first bandwidth.

In a possible manner, the second bandwidth has one frequency domain position, one frequency domain resource may be determined based on the second bandwidth and the frequency domain position of the second bandwidth, and the frequency domain resource may be one sub-BWP in the BWP.

Based on the foregoing technical solutions, the terminal device may dynamically send or receive a signal on a frequency domain resource of the first bandwidth. When a frequency domain position of the second bandwidth determined by using a plurality of signaling indications, by using the capability value of the terminal device, or by using the protocol predefinition is different, there is a switching process for the frequency domain position of the second bandwidth. It is considered that the frequency domain position of the second bandwidth is determined based on the frequency domain position of the first bandwidth. In this case, when a size of the first bandwidth is less than or equal to a maximum radio frequency bandwidth of the terminal device, the terminal device may not readjust a radio frequency when switching the frequency domain position of the second bandwidth. Therefore, a switching delay of the terminal device is reduced, and the terminal device can also obtain a larger frequency diversity gain.

FIG. 4 is a diagram of another frequency domain position 400 according to an embodiment of this application.

For example, configuration information of a BWP includes at least a frequency domain position of a first bandwidth. A frequency domain position of a second bandwidth is determined based on the frequency domain position of the first bandwidth.

In a possible manner, the frequency domain position of the second bandwidth is determined based on an offset and the frequency domain position of the first bandwidth. The offset is an offset of the frequency domain position of the second bandwidth relative to the frequency domain position of the first bandwidth.

For example, the configuration information of the BWP further includes the offset of the frequency domain position of the second bandwidth relative to the frequency domain position of the first bandwidth.

For example, the second bandwidth is located in a frequency domain resource range determined based on the first bandwidth and the frequency domain position of the first bandwidth.

In a possible manner, the second bandwidth has one frequency domain position, one frequency domain resource may be determined based on the second bandwidth and the frequency domain position of the second bandwidth, and the frequency domain resource may be one sub-BWP in the BWP.

Based on the foregoing technical solutions, a terminal device may dynamically send or receive a signal on a frequency domain resource of the first bandwidth. When frequency domain positions of the second bandwidth determined by using configuration information of a plurality of BWPs are different, there is a switching process for the frequency domain positions of the second bandwidth. It is considered that the frequency domain position of the second bandwidth is determined based on the frequency domain position of the first bandwidth. In this case, when a size of the first bandwidth is less than or equal to a maximum radio frequency bandwidth of the terminal device, the terminal device may not readjust a radio frequency when switching the frequency domain position of the second bandwidth. Therefore, a switching delay of the terminal device is reduced, and the terminal device can also obtain a larger frequency diversity gain.

FIG. 5 is a diagram of still another frequency domain position 500 according to an embodiment of this application.

For example, configuration information of a BWP includes at least a frequency domain position of a first bandwidth. A frequency domain position of a second bandwidth is determined based on the frequency domain position of the first bandwidth.

In a possible manner, the frequency domain position of the second bandwidth is determined based on an offset and the frequency domain position of the first bandwidth. The offset is an offset of the frequency domain position of the second bandwidth relative to the frequency domain position of the first bandwidth.

For example, the configuration information of the BWP further includes the offset of the frequency domain position of the second bandwidth relative to the frequency domain position of the first bandwidth.

For example, the second bandwidth is located in a frequency domain resource range determined based on the first bandwidth and the frequency domain position of the first bandwidth.

For example, the second bandwidth has a plurality of frequency domain positions.

For example, M frequency domain resources determined based on the second bandwidth and N frequency domain positions of the second bandwidth are M sub-BWPs in the BWP, where N and M are positive integers greater than 1.

It should be understood that N may be greater than M, may be equal to M, or may be less than M. Values of N and M are not limited in this embodiment of this application. When N is equal to M, determining N frequency domain resources based on the second bandwidth and the N frequency domain positions of the second bandwidth is a preferred manner.

In a possible manner, the second bandwidth has the plurality of frequency domain positions, a plurality of frequency domain resources may be determined based on the second bandwidth and the frequency domain positions of the second bandwidth, and the plurality of frequency domain resources may be defined as a plurality of sub-BWPs in the BWP. For example, the second bandwidth has five frequency domain positions. In this case, five frequency domain resources may be determined based on the second bandwidth and the frequency domain positions of the second bandwidth, and each frequency domain resource may be one sub-BWP in the BWP. For another example, the second bandwidth has five frequency domain positions. In this case, more than or less than five frequency domain resources may be determined based on the second bandwidth and the frequency domain positions of the second bandwidth, and each frequency domain resource may be one sub-BWP in the BWP.

Based on the foregoing technical solutions, one frequency domain resource determined based on the first bandwidth and the frequency domain position of the first bandwidth may be denoted as a first BWP, and the plurality of frequency domain resources determined based on the second bandwidth and the frequency domain positions of the second bandwidth may be denoted as second BWPs. In this case, the first BWP may be considered as a parent BWP of the plurality of second BWPs, and the plurality of second BWPs may be considered as sub-BWPs of the first BWP. For example, when the first BWP is denoted as a BWP #X, and the second BWPs may be respectively denoted as a BWP #X_0, a BWP #X_1, ..., and a BWP #X_Z, where Z is a quantity of second BWPs.

There may be the following three manners of configuring a plurality of sub-BWPs in one BWP.

Manner #A: Step 1: A network device configures a quantity M of sub-BWPs for a terminal device by using signaling (for example, RRC, a MAC CE, or DCI). Step 2: The terminal device determines that a bandwidth of each sub-BWP is obtained by dividing a bandwidth of the BWP by M. Step 3: When the bandwidth of each sub-BWP determined by the terminal device is not a positive integer, a bandwidth of a last sub-BWP is: the bandwidth of the BWP - (M - 1) x floor (the bandwidth of the BWP divided by M), where floor is a round-down operation.

Manner #B: A network device configures a bandwidth of each sub-BWP for a terminal device by using signaling (for example, RRC or a MAC CE).

Manner #C: A sub-BWP is predefined in a protocol. A method for determining the quantity M of sub-BWPs and a method for determining the bandwidth of each sub-BWP are similar to those in Manner #A. Details are not described herein again.

For example, the terminal device indicates, by using the DCI, that one of the plurality of sub-BWPs is an activated BWP. In view of this, the terminal device may communicate with the network device based on the activated sub-BWP. For example, the terminal device activates one of the sub-BWPs by reusing an existing indicator field (for example, a BWP indicator field or an FDRA indicator field) in the DCI or introducing a new indicator field, to establish a communication connection to the network device.

Based on the foregoing technical solutions, the terminal device may dynamically send or receive a signal on a frequency domain resource of the first BWP. The plurality of second BWPs are configured in the first BWP. Therefore, for frequency domain resource allocation of the plurality of second BWPs, refer to frequency domain resource allocation of the first BWP. In addition, when a size of the first bandwidth is less than or equal to a maximum radio frequency bandwidth of the terminal device, the terminal device may not readjust a radio frequency when switching frequency domain positions of the second BWPs. Therefore, a switching delay of the terminal device can be reduced, transmission efficiency of the terminal device is improved, and the terminal device can also obtain a larger frequency diversity gain. In further extension, the plurality of second BWPs may share all or some of same RRC configuration parameters (for example, physical channel configuration parameters or signal configuration parameters), so that memory overheads of the terminal device can be reduced, and complexity and costs of the terminal device is further reduced.

It may be understood that, that the BWP includes at least the first bandwidth and the second bandwidth in the configuration information of the BWP sent by the network device to the terminal device is limited in step 210. However, this embodiment of this application is not limited thereto. For example, in the configuration information of the BWP sent by the network device to the terminal device, the BWP may include the first bandwidth. The configuration information of the BWP includes indication information. The indication information indicates the maximum transmission bandwidth of the frequency domain resource used by the terminal device to receive or send the signal. In other words, whether the BWP needs to include the second bandwidth is not limited in this embodiment of this application, and another manner in which the terminal device can learn of, based on the configuration information of the BWP, the maximum transmission bandwidth of the frequency domain resource used by the terminal device to receive or send the signal is also included in this embodiment of this application.

It may be further understood that examples in FIG. 2 to FIG. 5 in embodiments of this application are merely intended to help a person skilled in the art understand embodiments of this application, but are not intended to limit embodiments of this application to specific scenarios shown in the examples. It is clear that a person skilled in the art may make various equivalent modifications or changes based on the examples in FIG. 2 to FIG. 5, and such modifications or changes also fall within the scope of embodiments of this application. For example, "dynamically sending or receiving the signal on the frequency domain resource of the first bandwidth" in FIG. 2 to FIG. 5 may be replaced with "dynamically transmitting or receiving the signal on the frequency domain resource of the first bandwidth".

It may be further understood that some optional features in embodiments of this application may be independent of other features in some scenarios, or may be combined with other features in some scenarios. This is not limited.

It may be further understood that the solutions in embodiments of this application may be properly combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on implementation processes of embodiments of this application.

It may be further understood that, in the foregoing method embodiments, the method and operations implemented by the terminal device or the network device may alternatively be implemented by a component (for example, a chip or a circuit) of the terminal device or the network device.

Corresponding to the method provided in the foregoing method embodiments, embodiments of this application further provide a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments.

In the foregoing embodiments provided in this application, the method provided in embodiments of this application is separately described from perspectives of the network device, the terminal device, and interaction between the network device and the terminal device. To implement functions in the method provided in embodiments of this application, the network device and the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

FIG. 6 and FIG. 7 each are a diagram of a structure of a possible communication apparatus according to an embodiment of this application. The communication apparatus may implement functions of the terminal device or the network device in the foregoing method embodiments. Therefore, beneficial effects of the foregoing method embodiments can also be implemented. In this embodiment of this application, the communication apparatus may be the terminal devices 110 to 160 shown in FIG. 1, may be the network device 170 shown in FIG. 1, or may be a module (such as a chip) used in the terminal device or the network device.

As shown in FIG. 6, the communication apparatus 600 includes a transceiver module 601. The transceiver module 601 may be configured to implement a corresponding communication function. The transceiver module 601 may also be referred to as a communication interface or a communication unit.

For example, the apparatus 600 may further include a processing module 602. The processing module 602 may be configured to implement a corresponding processing function.

For example, the apparatus 600 further includes a storage module. The storage module may be configured to store instructions and/or data. The processing module 602 may read the instructions and/or the data in the storage module, so that the apparatus implements actions of the terminal device or the network device in the foregoing method embodiments.

The apparatus 600 may be configured to perform the actions performed by the terminal device or the network device in the foregoing method embodiments. In this case, the apparatus 600 may be the terminal device or a component of the terminal device, or may be the network device or a component of the network device. The transceiver module 601 is configured to perform receiving/sending-related operations of the terminal device or the network device in the foregoing method embodiments, and the processing module 602 is configured to perform processing-related operations of the terminal device or the network device in the foregoing method embodiments.

In a design, the apparatus 600 is configured to perform the actions performed by the terminal device in the foregoing method embodiments.

In a possible implementation, the transceiver module 601 is configured to receive configuration information of a bandwidth part BWP from the network device. The BWP includes a first bandwidth and a second bandwidth, the first bandwidth is determined based on a radio frequency bandwidth of the terminal device, and the second bandwidth is determined based on a baseband bandwidth of the terminal device. The processing module 602 is configured to communicate with the network device by using the BWP.

For example, the first bandwidth indicates a maximum range of a frequency domain resource used by the terminal device to receive or send a signal, and the second bandwidth indicates a maximum transmission bandwidth of the frequency domain resource used by the terminal device to receive or send the signal.

For example, a size of the first bandwidth is less than or equal to a maximum radio frequency bandwidth of the terminal device, and a size of the second bandwidth is less than or equal to a maximum baseband bandwidth of the terminal device. Alternatively, both a size of the first bandwidth and a size of the second bandwidth are less than or equal to a maximum radio frequency bandwidth of the terminal device, and are greater than a maximum baseband bandwidth of the terminal device. Alternatively, both a size of the first bandwidth and a size of the second bandwidth are less than or equal to a maximum radio frequency bandwidth of the terminal device, and are less than or equal to a maximum baseband bandwidth of the terminal device. Alternatively, both a size of the first bandwidth and a size of the second bandwidth are greater than a maximum radio frequency bandwidth of the terminal device, and are greater than a maximum baseband bandwidth of the terminal device.

For example, the configuration information of the BWP includes at least a frequency domain position of the first bandwidth. A frequency domain position of the second bandwidth is determined based on the frequency domain position of the first bandwidth.

For example, that a frequency domain position of the second bandwidth is determined based on the frequency domain position of the first bandwidth includes: The frequency domain position of the second bandwidth is determined based on an offset and the frequency domain position of the first bandwidth. The offset is an offset of the frequency domain position of the second bandwidth relative to the frequency domain position of the first bandwidth.

For example, M frequency domain resources determined based on the second bandwidth and N frequency domain positions of the second bandwidth are M sub-BWPs in the BWP, where N and M are positive integers.

For example, the method further includes: The processing module 602 is configured to determine frequency domain resource allocation of a physical downlink shared channel PDSCH/physical uplink shared channel PUSCH based on the first bandwidth and the second bandwidth.

For example, for frequency domain resource allocation whose type is a type 0, the processing module 602 is configured to determine, based on the first bandwidth and the second bandwidth, a quantity of resource block groups included in the BWP. A quantity of resource blocks included in the BWP is determined based on the first bandwidth, and a size of the resource block group is determined based on the second bandwidth.

For example, the processing module 602 is configured to enable a processing delay of a first channel/first signal of the terminal device to be greater than a processing delay of a first channel/first signal of a second terminal device. A bandwidth of the first channel/first signal of the terminal device is greater than the maximum baseband bandwidth of the terminal device, and the bandwidth of the first channel/first signal of the terminal device is less than or equal to the maximum radio frequency bandwidth of the terminal device. A bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device.

The apparatus 600 may implement corresponding steps or procedures performed by the terminal device in the method embodiments according to embodiments of this application. The apparatus 600 may include modules configured to perform the method performed by the terminal device in any one of embodiments shown in FIG. 2 to FIG. 5.

In another design, the apparatus 600 is configured to perform the actions performed by the network device in the foregoing method embodiments.

In a possible implementation, the transceiver module 601 is configured to send configuration information of a bandwidth part BWP to the terminal device. The BWP includes a first bandwidth and a second bandwidth, the first bandwidth is determined based on a radio frequency bandwidth of the terminal device, and the second bandwidth is determined based on a baseband bandwidth of the terminal device. The processing module 602 is configured to communicate with the terminal device by using the BWP.

For example, the first bandwidth indicates a maximum range of a frequency domain resource used by the terminal device to receive or send a signal, and the second bandwidth indicates a maximum transmission bandwidth of the frequency domain resource used by the terminal device to receive or send the signal.

For example, a size of the first bandwidth is less than or equal to a maximum radio frequency bandwidth of the terminal device, and a size of the second bandwidth is less than or equal to a maximum baseband bandwidth of the terminal device. Alternatively, both a size of the first bandwidth and a size of the second bandwidth are less than or equal to a maximum radio frequency bandwidth of the terminal device, and are greater than a maximum baseband bandwidth of the terminal device. Alternatively, both a size of the first bandwidth and a size of the second bandwidth are less than or equal to a maximum radio frequency bandwidth of the terminal device, and are less than or equal to a maximum baseband bandwidth of the terminal device. Alternatively, both a size of the first bandwidth and a size of the second bandwidth are greater than a maximum radio frequency bandwidth of the terminal device, and are greater than a maximum baseband bandwidth of the terminal device.

For example, the configuration information of the BWP includes at least a frequency domain position of the first bandwidth. A frequency domain position of the second bandwidth is determined based on the frequency domain position of the first bandwidth.

For example, that a frequency domain position of the second bandwidth is determined based on the frequency domain position of the first bandwidth includes: The frequency domain position of the second bandwidth is determined based on an offset and the frequency domain position of the first bandwidth. The offset is an offset of the frequency domain position of the second bandwidth relative to the frequency domain position of the first bandwidth.

For example, M frequency domain resources determined based on the second bandwidth and N frequency domain positions of the second bandwidth are M sub-BWPs in the BWP, where N and M are positive integers.

For example, the method further includes: determining frequency domain resource allocation of a physical downlink shared channel PDSCH/physical uplink shared channel PUSCH based on the first bandwidth and the second bandwidth.

For example, for frequency domain resource allocation whose type is a type 0, a quantity of resource block groups included in the BWP is determined based on the first bandwidth and the second bandwidth. A quantity of resource blocks included in the BWP is determined based on the first bandwidth, and a size of the resource block group is determined based on the second bandwidth.

For example, a processing delay of a first channel/first signal of the terminal device is greater than a processing delay of a first channel/first signal of a second terminal device. A bandwidth of the first channel/first signal of the terminal device is greater than the maximum baseband bandwidth of the terminal device, and the bandwidth of the first channel/first signal of the terminal device is less than or equal to the maximum radio frequency bandwidth of the terminal device. A bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device.

The apparatus 600 may implement corresponding steps or procedures performed by the network device in the method embodiments according to embodiments of this application. The apparatus 600 may include modules configured to perform the method performed by the network device in any one of embodiments shown in FIG. 2 to FIG. 5.

It should be understood that a specific process in which each unit performs the foregoing corresponding step is described in detail in the foregoing embodiments. For brevity, details are not described herein again.

It should be further understood that the apparatus 600 herein is represented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a storage, a combined logic circuit, and/or another suitable component that supports the described functions. In an optional example, a person skilled in the art may understand that the apparatus 600 may be specifically the terminal device or the network device in the foregoing embodiments, and may be configured to perform the procedures and/or steps corresponding to the terminal device or the network device in the foregoing method embodiments. To avoid repetition, details are not described herein again.

The apparatus 600 in the foregoing solutions has a function of implementing the corresponding steps performed by the terminal device or the network device in the foregoing method. The functions may be implemented by hardware, or may be implemented by hardware executing corresponding software. The hardware or the software includes one or more modules corresponding to the foregoing functions. For example, the transceiver module may be replaced with a transceiver (for example, a sending module in the transceiver module may be replaced with a transmitter, and a receiving module in the transceiver module may be replaced with a receiver), and another unit such as the processing module may be replaced with a processor, to respectively perform receiving and sending operations and related processing operations in the method embodiments.

In addition, the transceiver module 601 may alternatively be a transceiver circuit (for example, may include a receiving circuit and a sending circuit), and the processing module may be a processing circuit.

It should be noted that the apparatus in FIG. 6 may be the device in the foregoing embodiments, or may be a chip or a chip system, for example, a system-on-a-chip (system-on-a-chip, SoC). The transceiver module may be an input/output circuit or a communication interface. The processing module is a processor, a microprocessor, or an integrated circuit integrated on the chip. This is not limited herein.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a storage 730. The storage 730 is configured to store instructions executed by the processor 710, store input data required by the processor 710 to run instructions, or store data generated after the processor 710 runs instructions.

When the communication apparatus 700 is configured to implement the method in the foregoing method embodiments, the processor 710 is configured to perform functions of the processing module 602, and the interface circuit 720 is configured to perform functions of the transceiver module 601.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Method steps in embodiments of this application may be implemented by hardware, or may be implemented by a processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a special-purpose computer, a computer network, or another programmable apparatus. The computer programs or the instructions may be stored in a computer-readable storage medium, or transmitted or received by using a computer-readable storage medium. The computer-readable storage medium may be any usable medium that can be accessed by the computer, or a data storage device, such as a server, integrating one or more usable media. The usable medium may be a magnetic medium, for example, a floppy disk, a hard disk, or a magnetic tape, may be an optical medium, for example, a DVD, or may be a semiconductor medium, for example, a solid-state drive (solid-state drive, SSD).

In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. In the text descriptions of this application, a character "/" generally indicates an "or" relationship between associated objects. In a formula of this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   receiving, by a terminal device, configuration information of a bandwidth part BWP from a network device, wherein the BWP comprises a first bandwidth and a second bandwidth, the first bandwidth is determined based on a radio frequency bandwidth of the terminal device, and the second bandwidth is determined based on a baseband bandwidth of the terminal device; and
   communicating, by the terminal device, with the network device by using the BWP.

2. The method according to claim 1, wherein
   the first bandwidth indicates a maximum range of a frequency domain resource used by the terminal device to receive or send a signal, and the second bandwidth indicates a maximum transmission bandwidth of the frequency domain resource used by the terminal device to receive or send the signal.

3. The method according to claim 1 or 2, wherein

   a size of the first bandwidth is less than or equal to a maximum radio frequency bandwidth of the terminal device, and a size of the second bandwidth is less than or equal to a maximum baseband bandwidth of the terminal device;
   both a size of the first bandwidth and a size of the second bandwidth are less than or equal to a maximum radio frequency bandwidth of the terminal device, and are greater than a maximum baseband bandwidth of the terminal device;
   both a size of the first bandwidth and a size of the second bandwidth are less than or equal to a maximum radio frequency bandwidth of the terminal device, and are less than or equal to a maximum baseband bandwidth of the terminal device; or
   both a size of the first bandwidth and a size of the second bandwidth are greater than a maximum radio frequency bandwidth of the terminal device, and are greater than a maximum baseband bandwidth of the terminal device.

4. The method according to any one of claims 1 to 3, wherein
   the configuration information of the BWP comprises at least a frequency domain position of the first bandwidth, and a frequency domain position of the second bandwidth is determined based on the frequency domain position of the first bandwidth.

5. The method according to claim 4, wherein that a frequency domain position of the second bandwidth is determined based on the frequency domain position of the first bandwidth comprises:
   the frequency domain position of the second bandwidth is determined based on an offset and the frequency domain position of the first bandwidth, wherein the offset is an offset of the frequency domain position of the second bandwidth relative to the frequency domain position of the first bandwidth.

6. The method according to claim 4 or 5, wherein M frequency domain resources determined based on the second bandwidth and N frequency domain positions of the second bandwidth are M sub-BWPs in the BWP, wherein N and M are positive integers.

7.  The method according to any one of claims 1 to 6, wherein the method further comprises:
    determining frequency domain resource allocation of a physical downlink shared channel PDSCH/physical uplink shared channel PUSCH based on the first bandwidth and the second bandwidth.

8.  The method according to claim 7, wherein
    for frequency domain resource allocation whose type is a type 0, a quantity of resource block groups comprised in the BWP is determined based on the first bandwidth and the second bandwidth, wherein a quantity of resource blocks comprised in the BWP is determined based on the first bandwidth, and a size of the resource block group is determined based on the second bandwidth.

9.  The method according to any one of claims 3 to 8, wherein
    a processing delay of a first channel/first signal of the terminal device is greater than a processing delay of a first channel/first signal of a second terminal device, wherein a bandwidth of the first channel/first signal of the terminal device is greater than the maximum baseband bandwidth of the terminal device, the bandwidth of the first channel/first signal of the terminal device is less than or equal to the maximum radio frequency bandwidth of the terminal device, a bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device.

10. A communication method, comprising:

    sending, by a network device, configuration information of a bandwidth part BWP to a terminal device, wherein the BWP comprises a first bandwidth and a second bandwidth, the first bandwidth is determined based on a radio frequency bandwidth of the terminal device, and the second bandwidth is determined based on a baseband bandwidth of the terminal device; and
    communicating, by the network device, with the terminal device by using the BWP.

11. The method according to claim 10, wherein
    the first bandwidth indicates a maximum range of a frequency domain resource used by the terminal device to receive or send a signal, and the second bandwidth indicates a maximum transmission bandwidth of the frequency domain resource used by the terminal device to receive or send the signal.

12. The method according to claim 10 or 11, wherein

    a size of the first bandwidth is less than or equal to a maximum radio frequency bandwidth of the terminal device, and a size of the second bandwidth is less than or equal to a maximum baseband bandwidth of the terminal device;
    both a size of the first bandwidth and a size of the second bandwidth are less than or equal to a maximum radio frequency bandwidth of the terminal device, and are greater than a maximum baseband bandwidth of the terminal device;
    both a size of the first bandwidth and a size of the second bandwidth are less than or equal to a maximum radio frequency bandwidth of the terminal device, and are less than or equal to a maximum baseband bandwidth of the terminal device; or
    both a size of the first bandwidth and a size of the second bandwidth are greater than a maximum radio frequency bandwidth of the terminal device, and are greater than a maximum baseband bandwidth of the terminal device.

13. The method according to any one of claims 10 to 12, wherein
    the configuration information of the BWP comprises at least a frequency domain position of the first bandwidth, and a frequency domain position of the second bandwidth is determined based on the frequency domain position of the first bandwidth.

14. The method according to claim 13, wherein that a frequency domain position of the second bandwidth is determined based on the frequency domain position of the first bandwidth comprises:
    the frequency domain position of the second bandwidth is determined based on an offset and the frequency domain position of the first bandwidth, wherein the offset is an offset of the frequency domain position of the second bandwidth relative to the frequency domain position of the first bandwidth.

**15.** The method according to claim 13 or 14, wherein M frequency domain resources determined based on the second bandwidth and N frequency domain positions of the second bandwidth are M sub-BWPs in the BWP, wherein N and M are positive integers.

**16.** The method according to any one of claims 10 to 15, wherein the method further comprises:
determining frequency domain resource allocation of a physical downlink shared channel PDSCH/physical uplink shared channel PUSCH based on the first bandwidth and the second bandwidth.

**17.** The method according to claim 16, wherein
for frequency domain resource allocation whose type is a type 0, a quantity of resource block groups comprised in the BWP is determined based on the first bandwidth and the second bandwidth, wherein a quantity of resource blocks comprised in the BWP is determined based on the first bandwidth, and a size of the resource block group is determined based on the second bandwidth.

**18.** The method according to any one of claims 12 to 17, wherein
a processing delay of a first channel/first signal of the terminal device is greater than a processing delay of a first channel/first signal of a second terminal device, wherein a bandwidth of the first channel/first signal of the terminal device is greater than the maximum baseband bandwidth of the terminal device, the bandwidth of the first channel/first signal of the terminal device is less than or equal to the maximum radio frequency bandwidth of the terminal device, a bandwidth of the first channel/first signal of the second terminal device is less than or equal to a maximum baseband bandwidth of the second terminal device, and the bandwidth of the first channel/first signal of the second terminal device is less than or equal to a maximum radio frequency bandwidth of the second terminal device.

**19.** A communication apparatus, comprising a module configured to perform the method according to any one of claims 1 to 9 or the method according to any one of claims 10 to 18.

**20.** A communication apparatus, comprising a processor and a communication interface, wherein the communication interface is configured to receive a signal from a communication apparatus other than the communication apparatus and transmit the signal to the processor, or send a signal from the processor to a communication apparatus other than the communication apparatus; and the processor is configured to implement the method according to any one of claims 1 to 9 or the method according to any one of claims 10 to 18 by using a logic circuit or by executing code instructions.

**21.** A computer-readable storage medium, wherein the computer-readable storage medium stores a computer program; and when the computer program is run, the method according to any one of claims 1 to 9 or the method according to any one of claims 10 to 18 is implemented.

**22.** A computer program product, wherein the computer program product comprises computer program code; and when the computer program code is run, the method according to any one of claims 1 to 9 or the method according to any one of claims 10 to 18 is implemented.

EP 4 451 735 A1

FIG. 1

200

A network device sends configuration information of a BWP to a terminal device ⟋ 210

The terminal device receives the configuration information of the BWP from the network device ⟋ 220

The terminal device communicates with the network device by using the BWP ⟋ 230

FIG. 2

26

First
bandwidth

Second
bandwidth

First frequency
domain position

FIG. 3

First
bandwidth

Second
bandwidth

Second frequency
domain position

First frequency
domain position

FIG. 4

First bandwidth

Second bandwidth

Second frequency domain position

Second bandwidth

Second frequency domain position

First frequency domain position

FIG. 5

600

601

602

Transceiver module

Processing module

FIG. 6

Communication apparatus 700

Processor 710

Interface circuit 720

Storage 730

FIG. 7

| INTERNATIONAL SEARCH REPORT | International application No. |
|---|---|
| | **PCT/CN2023/071343** |

**A.    CLASSIFICATION OF SUBJECT MATTER**

H04W 28/08(2023.01)i;H04W 28/20(2009.01)i

According to International Patent Classification (IPC) or to both national classification and IPC

**B.    FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 带宽部分, 配置, 射频, 带宽, 能力, 基带, 相同, 不同, 不等于, 大于, 小于, BWP, config+, RF, radio, frequency, bandwidth, BW, capability, BB, baseband, same, different, not equal to, greater, less

**C.    DOCUMENTS CONSIDERED TO BE RELEVANT**

| Category* | Citation of document, with indication, where appropriate, of the relevant passages | Relevant to claim No. |
|---|---|---|
| Y | CN 113170475 A (BEIJING XIAOMI MOBILE SOFTWARE CO., LTD.) 23 July 2021 (2021-07-23) description, paragraphs [0076]-[0107] | 1-22 |
| Y | CN 108633046 A (HUAWEI TECHNOLOGIES CO., LTD.) 09 October 2018 (2018-10-09) description, paragraphs [0045]-[0073] | 1-22 |
| A | CN 110475292 A (HUAWEI TECHNOLOGIES CO., LTD.) 19 November 2019 (2019-11-19) entire document | 1-22 |
| A | US 2021314946 A1 (QUALCOMM INC.) 07 October 2021 (2021-10-07) entire document | 1-22 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 February 2023** | **22 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/071343**

| Patent document cited in search report | | | Publication date (day/month/year) | Patent family member(s) | | | Publication date (day/month/year) |
|---|---|---|---|---|---|---|---|
| CN | 113170475 | A | 23 July 2021 | WO | 2022193195 | A1 | 22 September 2022 |
| CN | 108633046 | A | 09 October 2018 | WO | 2018171601 | A1 | 27 September 2018 |
| | | | | US | 2020022131 | A1 | 16 January 2020 |
| | | | | EP | 3567959 | A1 | 13 November 2019 |
| | | | | IN | 201937031397 | A | 11 October 2019 |
| CN | 110475292 | A | 19 November 2019 | WO | 2019214523 | A1 | 14 November 2019 |
| | | | | EP | 3780726 | A1 | 17 February 2021 |
| | | | | US | 2021084619 | A1 | 18 March 2021 |
| US | 2021314946 | A1 | 07 October 2021 | WO | 2021202505 | A2 | 07 October 2021 |
| | | | | IN | 202227043154 | A | 07 October 2022 |

Form PCT/ISA/210 (patent family annex) (July 2022)

**EP 4 451 735 A1**

## REFERENCES CITED IN THE DESCRIPTION

**Patent documents cited in the description**

- CN 202210114486